# EUROPEAN PATENT APPLICATION

(11) **EP 3 000 428 A2**
(43) Date of publication of application: **30.03.2016**
(21) Application number: 15183400.9
(22) Date of filing: 01.09.2015
(51) Int. Cl.: A61C 8/00

(54) **DENTAL IMPLANT**

(30) Priority: 05.09.2014 TW 103215902 U
(71) Applicant: Chen, Leon, Taipei City 105 (TW)
(72) Inventor: Chen, Leon, Taipei City 105 (TW)
(74) Representative: Schwerbrock, Florian

(57) **Abstract**

The present invention provides a dental implant, includes a body portion, a first thread portion, a head portion, a plurality of second thread portions and a plurality of trenches. The body portion defines a drilling axial direction in a longitudinal direction thereof. The first thread portion is arranged on one end of the body portion in the drilling axial direction. The head portion is arranged on another end of the body portion in the drilling axial direction. The second thread portions have a pitch larger than that of the first thread portion, and formed on radial sides of the body portion. The second thread portions are arranged at different positions in the drilling axial direction. Each second thread portion has a cutting face and a cumulative face at two ends of the dental implant in a rotative direction P. The trench is formed at a radial side of the head portion and the body portion, and passes through the cutting faces and the cumulative faces from the head portion to the first thread portion.

## Description

### BACKGROUND OF THE INVENTION

### 1. Field of the Invention

The present invention is related to a dental implant. In particular, the present invention relates to a dental implant which is a surgical component used in dental restoration surgery.

### 2. Description of Related Art

People rely teeth to eat or bit for subsisting every day. However, if teeth are carelessly maintained and cleaned, they are easily to cause tooth decayed or tooth exfoliation. With the development of science and technology, there are more and more patients who need tooth restoration; therefore the amount of dental clinics are built more and more.

Traditionally, dental restoration needs to remove tooth first. After three months, injuries of the removed site are healed over, it needs surgery again to have sinus lift, so that filling bone graft materials (such as bone substitute or bone meal) is hence achieved; then a hole on the upper jaw (maxilla) is drilled for filling the bone graft materials. After the bone graft materials had been filled, it needs to wait for further three to six months for healing; afterward, the dental implant therefore can be stably placed in the drilled hole of the upper jaw. Finally, after three to six months, a dental crown can be positioned on the dental implant to finish the dental restoration. In general, the period of traditional tooth restoration need to spend approximately one and half year.

There are also advanced dental restoration methods, such as Taiwan Patent Application No. 095140364 "Five-In-One Fast Dental Implantation Method Having Beauty Effect" and Taiwan Patent Application No. 095140361 "Increased Sinus Implant Surgery Instruments", which disclosed various fast dental implantation methods. The kernel of those methods is only required one medical surgery to finish five procedures, including tooth revmoval, preoperative sinus lifting, bone grafting, implant placing, and dental crown installation. After three to four months, the artificial tooth can be attached. Thus, the aforementioned dental implantation treatment only takes half year, and the dental patient can use the new implanting artificial tooth to eat. The aforementioned dental restoration is less invasive with higher success rate. Those are practicability that not only the number of times of surgery can be reduced for patient, but also the healing period is shortened.

However, before placing the conventional dental implant in jaw bone, the aforementioned fast dental implantation needs to drill a pilot hole by dentist, by using a dental drill engine (i.e. dental hand piece), for dental restoration. Before the placement of dental implant, the pilot hole needs to be gradually expanded by several different diameters of drills for several times. As a result, the duration of dental surgery is prolonged and dental trauma is expanded and deepened, so that the patient endures longer pain and their injuries are difficult to be healed. Besides, it may increase the error probability of fault drilling or over-deep drilling if the jaw bone is drilled again and again; in the anatomical viewpoint, the sinus membrane may be drilled through if the upper jaw (maxillary sinus) is drilled too deep, and the facial nerve may be hurt if the lower jaw (mandible) is drilled too deep.

Besides, bone grafting procedure is necessary if patient lacks of bone (because the dental implant needs to be buried in a plenty of healthy bone). However, the bone grafting surgery needs bone graft materials to fill a defeat portion, and it will increase additional burden for dental clinic.

Therefore, it is desirable to propose a novel dental implant to overcome the above-mentioned problems, which can combine the drilling procedures and placement of dental implant, so as to avoid the conventional restoration problem and repeatedly bone drilling. And then, the implanting surgery time can be shortened, and mouth traumas are reduced, or probably, the self-bone pieces (i.e. natural bone pieces) of dental patient can be guided to a defeat portion in which lacks of bone during the implant drilling process.

### SUMMARY OF THE INVENTION

The objective of the present invention is to provide a dental implant for dental restoration which may incorporate the function of the dental drilling procedure (i.e. tapping in the bone) and the implant installation procedure, so that the duration of dental restoration surgery time is shortened and mouth traumas is reduced, and therefore to give dental patient relief from pain and speed wound healing.

Another objective of the present invention is to provide a dental implant for eliminating the gradual expanding the pilot hoe by repeatedly drilling on jaw bone with several drilling steps, and further to lessen the conditions of fault drilling or over-deep drilling in the jaw bone by the dental drill engine (or called as dental hand piece).

A further objective of the present invention is to guide bone scraps to approach the defeat portion which lacks of bone, so as to reduce the requirement for filling the bone graft materials.

In another aspect of the invention, a dental implant is provided, which comprise a body portion, a first thread portion, a head portion, a plurality of second thread portions and a plurality of trenches. The body portion defines a drilling axial direction along a longitudinal direction thereof. The first thread portion is formed on one end of the body portion along the drilling axial direction. The head portion is formed on another end of the body portion along the drilling axial direction. The second thread portion has a pitch larger than a pitch of the first thread portion, and is disposed at radial sides of the body portion; wherein the second thread portions are distributed along the drilling axial direction over the body portion, and each second thread portion has a cutting face and a cumulative face respectively disposed at two ends of a rotative direction in a rotative manner. The trenches are formed on radial sides of the head portion and the body portion, and across through the cutting faces and the cumulative faces from the head portion to approach the first thread portion.

The present invention also provides a dental implant, which comprise a body portion, a first thread portion, a head portion, a plurality of second thread portions and a plurality of trenches. The body portion defines a drilling axial direction along a longitudinal direction thereof. The first thread portion is formed on one end of the body portion along the drilling axial direction. The head portion is formed on another end of the body portion along the drilling axial direction. Each second thread portion has a pitch larger than a pitch of the first thread portion, and is formed on a radial side of the body portion; wherein the second thread portions are rotated around the drilling axial direction to form a tangent direction. The trenches are formed on radial sides of the head portion and the body portion, and extend from the head portion to approach the first thread portion, wherein an angle Φ is intersected by the tangent direction and the trench when the tangent direction rotated toward one end of the drilling axial direction, and the angle Φ ≦ 90 degrees.

According to an embodiment of the aforesaid dental implant, wherein the head portion includes a peak, the peak extending along a contour of the head portion by an inclined angle δ conformed with 0 ≦ δ ≦ 30 degrees.

According to an embodiment of the aforesaid dental implant, wherein a diameter H1 of the body portion approximated to the head portion is smaller than or equal to a diameter H2 of the body portion far away from the head portion. In the further embodiment, an interval is formed between a top end of the head portion and a neighboring periphery of the trench conformed with S/H1 ≦ 0.3.

According to an embodiment of the aforesaid dental implant, wherein each of the second thread portions has a crest, wherein lines connected the crests are extended and intersected to define an intersection angle ψ1, and an axial cross of the body portion defines an intersection angle ψ2 conformed with ψ1 ≥ ψ2.

According to an embodiment of the aforesaid dental implant, wherein a thread height of the second thread portions approximated to the head portion is smaller than or equal to a thread height of the second thread portions far away from the head portion.

According to an embodiment of the aforesaid dental implant, wherein a trench width of the trench approximated to the head portion is larger than or equal to a trench width of the trenches far away from the head portion.

According to an embodiment of the aforesaid dental implant, wherein a trench depth of the trench approximated to the head portion is larger than or equal to a trench depth of the trenches far away from the head portion.

According to an embodiment of the aforesaid dental implant, wherein each second thread portion has an equal pitch, and an interconnecting portion among the second thread portions and the body portion has a base width, the base width approximated to the head portion is smaller than or equal to the base width far away from the head portion.

According to an embodiment of the aforesaid dental implant, wherein each of the second thread portions has a crest being peak-shaped, arc-shaped or gear-shaped.

According to an embodiment of the aforesaid dental implant, wherein each of the second thread portions includes a main sustaining face and a secondary sustaining face, the main sustaining face is faced to the head portion, the secondary sustaining face is back to the head portion, an inclined angle of the main sustaining face is smaller than or equal to an inclined angle of the secondary sustaining face.

According to an embodiment of the aforesaid dental implant, wherein a top end of the head portion is flat-shaped or curve-shaped.

According to an embodiment of the aforesaid dental implant, wherein an angle α1 is formed between a tangent direction of the cutting face and the cutting face conformed with 20 ≦ α1 ≦ 90 degrees.

According to an embodiment of the aforesaid dental implant, wherein the cutting face and the adjoining cumulative face are formed curve shape or interconnected without folding angle.

According to an embodiment of the aforesaid dental implant, wherein a radius of the second thread portion is larger than a curvature radius of the cutting face.

The dental implant of the present invention has advantages as followed. First, the jaw bone can be avoid being drilled repeatedly and dug over, so that the duration of dental implantation surgery is shortened and mouth traumas is reduced, and therefore to give dental patient relief from pain and wound healing. Second, the conditions of fault drilling or over-deep drilling clinically in the jaw bone are lessened. Third, during the jaw bone is drilled, bone scraps in the trench can be guided toward the head portion, and then the bone scrap can be used to push sinus membrane, so as to reduce possibility of puncturing the sinus membrane; Besides, the bone scrap also can be simultaneously filled to the neighboring of the head portion of the dental implant or toward the neighboring of the sinus membrane. Otherwise, bone scraps in the trench can be alternatively guided toward radial sides of the dental implant, so as to fill the osteoporosis site in the jaw which close to the radial sides. In this manner, the self-bone (i.e. natural bone) guided is made which can reduce the requirement of bone grafting. Finally, different structure configuration can fulfill dental patients by various conditions.

For further understanding of the present invention, reference is made to the following detailed description illustrating the embodiments and examples of the present invention. The description is for illustrative purpose only and is not intended to limit the scope of the claim.

### BRIEF DESCRIPTION OF THE DRAWINGS

FIG. 1A is a perspective view of a dental implant of first embodiment according to the present invention;
FIG. 1B to FIG. 1D are different side views of dental implant of first embodiment according to the present invention;
FIG. 1E is a top view of dental implant of first embodiment according to the present invention;
FIG. 1F is a cross-sectional view along X-X line of FIG. 1C;
FIG. 1G is a cross-sectional view along Y-Y line of FIG. 1C;
FIG. 1H is a partial enlarged view of dental implant of first embodiment drilling a jaw bone according to the present invention;
FIG. 2A to FIG. 2B are perspective views of the dental implant as cutting a jaw bone according to the present invention;
FIG. 3A to FIG. 3C are diagrams about drilling resistance of the dental implant according to the present invention;
FIG. 4 is a side view of dental implant of second embodiment according to the present invention;
FIG. 5 is a side view of dental implant of third embodiment according to the present invention;
FIG. 6A is a perspective view of dental implant of fourth embodiment according to the present invention;
FIG. 6B is a top view of the dental implant of fourth embodiment according to the present invention;
FIG. 6C is a cross-sectional view along the rectangular plane of FIG. 6A;
FIG. 7A is a perspective view of dental implant of fifth embodiment according to the present invention;
FIG. 7B is a front view of the dental implant of fifth embodiment according to the present invention;
FIG. 7C to FIG. 7D are top views of the dental implant of fifth embodiment according to the present invention;
FIG. 7E is a mirror view of dental implant of fifth embodiment according to the present invention;
FIG. 8A to FIG. 8B are cross-sectional views of dental implant with different types of cutting face according to the present invention;
FIG. 8C is a diagram of drilling resistance related to curvature radius of cutting face according to FIG. 8A to FIG. 8B;
FIG. 9A to FIG. 9B are cross-sectional views of dental implant with different areas of body portion according to the present invention;
FIG. 9C is a diagram of drilling resistance related to sectional area(A) of second thread portion of body portion according to FIG. 9A to FIG. 9B;
FIG. 10A is an enlarged cross-sectional view of head portion of the dental implant according to the present invention;
FIG. 10B is a diagram of drilling resistance related to inclined angle (δ) of head portion according to FIG. 10A;
FIG. 11 is an enlarged cross-sectional view of head portion of dental implant of sixth embodiment according to the present invention;
FIG. 12 is a partial cross-sectional view of dental implant of seventh embodiment according to the present invention;
FIG. 13 is a partial cross-sectional view of dental implant of eighth embodiment according to the present invention;
FIG. 14 is a partial cross-sectional view of dental implant of ninth embodiment according to the present invention;
FIG. 15 is a partial cross-sectional view of dental implant of tenth embodiment according to the present invention;
FIG. 16 is a partial cross-sectional view of dental implant of eleventh embodiment according to the present invention;
FIG. 17 is a partial cross-sectional view of dental implant of twelfth embodiment according to the present invention;
FIG. 18 to FIG. 22 are perspective views of dental implant of thirteenth embodiment according to the present invention;
FIG. 23 is a cross-sectional view of dental implant of fourteenth embodiment according to the present invention;
FIG. 24 is a cross-sectional view of dental implant of fifteenth embodiment according to the present invention;
FIG. 25 is a cross-sectional view of dental implant of sixteenth embodiment according to the present invention; and
FIG. 26 is a side view of dental implant of fourteenth embodiment according to the present invention.

### DETAILED DESCRIPTION OF THE PREFERRED EMBODIMENTS

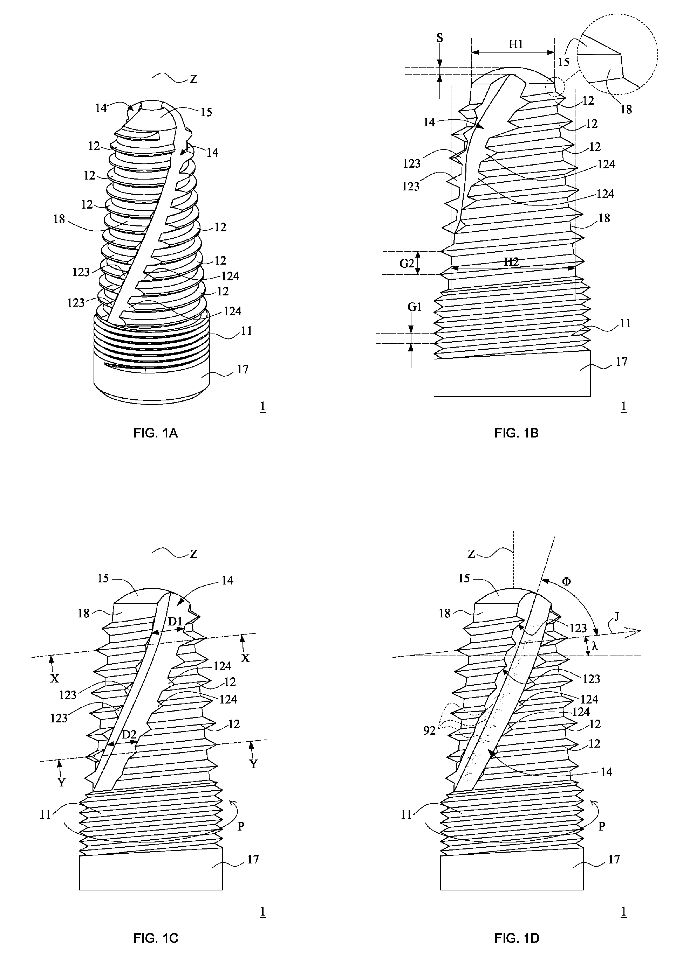

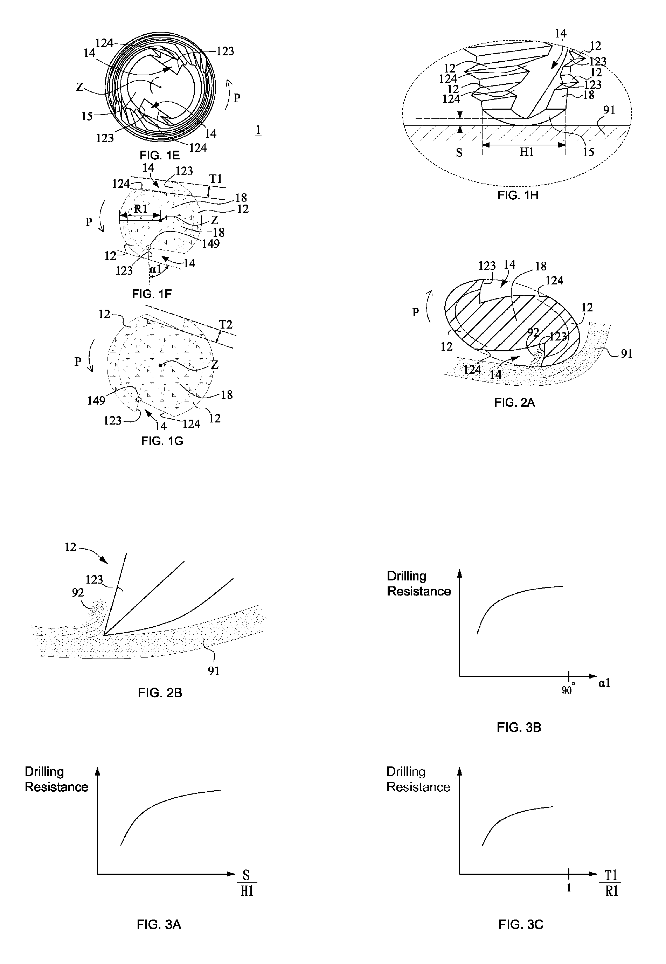

Please refer to FIG. 1A to FIG. 1E and FIG. 1H, which are different views of dental implant according to the present invention. As shown in FIG. 1A to FIG. 1D, a dental implant 1 for dental restoration or dental surgery is placed in a jaw bone 91 (as shown in FIG. 1H), which includes a body portion 18, a first thread portion 11, a head portion 15, a plurality of second thread portions 12 and two trenches 14. The body portion 18 has a drilling axial direction Z along a longitudinal direction thereof. The first thread portion 11 is formed on a lower end of the body portion 18 (or one end of the drilling axial direction Z). The head portion 15 is formed on an upper end of the body portion 18 (or another end of the drilling axial direction Z). Therefore, the head portion 15 and the first thread portion 11 are respectively arranged at two opposite ends of the body portion 18 along the drilling axial direction Z. In this embodiment, the first thread portion 11 is a screw thread structure continuously rotated in multiple loops. The head portion 15 is arc-shaped head in this emdodiment. The second thread portions 12 have a pitch which is larger than a pitch of the first thread portions 11. In other words, the pitch G2 of the second thread portion 12 is larger than the pitch G1 of the first thread portion 11 (as shown in FIG. 1B). Besides, the second thread portion 12 are formed laterally (i.e. approximately along a horizontal direction) on radial sides of the body portion 18. Thus, each second thread portion 12 (as shown in FIG. 1D) is nearly aligned in the horizontal direction. Specifically, each second thread portion 12 is a piece or a fragment of arc-shaped screw thread (as shown in cross-sectional views of FIG. 1F and FIG. 1G). As shown in FIG. 1D, the second thread portion 12 rotates along the drilling axial direction Z to form a tangent direction J. The tangent direction J of the second thread portion 12 and the horizontal line are intersected to form an angle λ (the tangent direction J is generally arranged from lower left toward upper right in FIG. 1D). Thus, when the dental implant 1 is rotated clockwise, and the dental implant 1 can be screwed into the jaw bone 91 demonstrated in FIG. 1H. Preferably, the angle λ generally is smaller than 20 degrees. Therefore, the direction of the second thread portion 12 (i.e. the direction of the tangent direction J) is substantially arranged in a traverse manner. As a result, when the dental implant 1 is rotated around the drilling axial direction Z , the dental implant 1 can be screwed into the jaw bone 91 gradually by means of the second thread portion 12.

The plurality of second thread portions 12 are distributed or disposed at different positions along the drilling axial direction Z. Each second thread portion 12 has a cutting face 123 and a cumulative face 124 respectively disposed at two opposite ends of the dental implant 1 along the rotative direction P. The two opposite ends of the rotative direction P means one end in clockwise direction and another end in counterclockwise. The cutting face 123 and the cumulative face 124 are illustrated in detail as shown in FIG. 1C, FIG. 1F and FIG. 1G. To obtain a X-X cross-sectional view and a Y-Y cross-sectional view of the dental implant 1 taken from the second thread portion 12, the X-X cross-sectional view is shown in FIG. 1F, the Y-Y cross-sectional view is shown in FIG. 1G. As shown in FIG. 1F and FIG. 1G, the second thread portions 12 are formed at a radial outside of the body portion 18. Each second thread portion 12 is substantially arc-shaped along the rotative direction P. The cutting face 123 and the cumulative face 124 are arranged at a front and rear ends of the second thread portion 12 along the rotative direction P, namely, one of which is clockwise end and another one is counterclockwise end along the rotative direction P. The front end and the rear end (along the rotative direction P) of the second thread portion 12 are contiguous to one of the trenches 14, respectively. Similarly, each of trenches 14 has a front and rear ends along the rotative direction P which are contiguous to one of the second thread portions 12, respectively. Accordingly, the second thread portions 12 and the trenches 14 are formed around a periphery of the body portion 18 in a circle. An interconnecting portion (within the trench 14) between the cutting face 123 and the cumulative face 124 are formed an acute angle corner 149 (i.e. having folding angle). As shown in FIG. 1C, the trench 14 has a trench width D1 approximated to the head portion 15, and a trench width D2 far away from the head portion 15. The trench width D1 is larger or equal to the trench width D2 (i.e. D1 ≧ D2). Consequently, as the dental implant 1 is drilled and embedded in the jaw bone 91, the trench 14 is filled with bone scrap 92, and therefore the amount of bone scrap 92 at a deeper portion of the jaw bone 91 may be more than the amount of bone scrap 92 at a shallow portion of the jaw bone 91. It therefore provides the dental implant 1 stable fixing structure, and the dental implant 1 in the jaw bone 91 is surrounded and covered by bone or bone scrap 92. Further, refer to in FIG. 1F and FIG. 1G, the trench 14 has a trench depth T1 approximated to the head portion 15, and a trench depth T2 far away from the head portion 15. In a preferred embodiment, the trench depth T1 is larger than the trench depth T2 (i.e. T1>T2). Consequently, as the dental implant 1 is drilled and embedded in the jaw bone 91, the trench 14 is filled with bone scrap 92, and therefore the amount of bone scrap 92 at a deeper portion of the jaw bone 91 (as shown in FIG. 1F) may be more than the amount of bone scrap 92 at a shallow portion of the jaw bone 91 (as shown in FIG. 1 G). It therefore provides the dental implant 1 stable fixing structure. As shown in FIG. 1F, a tangent direction of the cutting face 123 and the cutting face 123 are intersected to form an angle α1. The magnitude of angle α1 may affect the difficulty of lateral cutting of the second thread portion 12, in which the lateral cutting is made by the radial sides of the dental implant 1 (i.e. by the cutting face 123).

As shown in FIG. 1B to FIG. 1D, a lower end of the dental implant 1 may be formed, connected or coupled with a dental connecting element 17, thus the dental implant 1 can be interconnected or combined with an external piece by the dental connecting element 17. The trenches 14 are formed at radial sides of the head portion 15 and the body portion 18, and passed through the plurality of the cutting faces 123 and the cumulative faces 124 from the head portion 15 to the first thread portion 11. In other words, the trenches 14 are downwardly extended from the head portion 15 to the first thread portion 11. As shown in FIG. 1E of top view which demonstrates embodiment with two trenches 14, being arc-shaped, extended outward in a radial manner from a center of the head portion 15. As shown in FIG. 1D, the tangent direction J of the second thread portion 12 is intersected with the trench 14 to form an angle Φ if the tangent direction J is rotated toward the upper end of the drilling axial direction Z. The angle Φ is smaller than or equal to 90 degrees (i.e., Φ ≦ 90 degrees). Accordingly, as the dental implant 1 of this embodiment is screwing into the jaw bone 91, the cutting face 123 of the second thread portion 12 moves along the track of the tangent direction J, and therefore push and squeeze the bone scraps 92 inside the trench 14 along the track of the tangent direction J. In the meanwhile, a left wall of the trench 14 (formed by the cutting faces 123 showed in FIG. 1D) has an inclined angle Φ, so that it can provides or exerts the bone scraps 92 a downward component of force. Therefore the bone scraps 92 can gradually be moved downward inside the trench 14 by moving along a direction away from the head portion 15. If there is osteoporosis at radial sides of the dental implant 1 (the left and right sides as shown in FIG. 1D), the bone scrap 92 can be pushed to fill the porous portion at the radial sides (i.e. osteoporosis site) during the bone scraps 92 gradually moves downward (along a direction away from the head portion 15). In other words, the bone scrap 92 could be guided to fill the porous bone at radial sides of the dental implant 1, so that the bone density surrounded the radial side of the dental implant 1 would be increased. Therefore, the surrounding structure around the dental implant 1 is more stable. Further, since the bone scrap 92 is biologically natural components belonged to the patients themselves, the requirements for filling or re-supplying bone graft materials to the radial sides of the dental implant 1 can be reduced, hence the cost of surgery is also reduced.

As shown in FIG. 1B, the body portion 18 has a diameter H1 approximated to the head portion 15, and a diameter H2 far away from the body portion 18. In this embodiment, the diameter H1 is smaller than the diameter H2 (that is H1<H2). In other words, the body portion 18 is gradually enlarged from the head portion 15 toward the first thread portion 11 (i.e. taper shaped in cross-sectional view). Besides, an interconnecting portion between the head portion 15 and the body portion 18 is formed an folding corner (as shown in the partial enlarged view of FIG. 1B). As shown in FIG. 1H, an interval S is formed between the trench 14 and the tip end of the head portion 15. Generally, the interval S is conformed with an equation of S/H1 ≦ 0.5, and in a preferred embodiment S/H1 ≦ 0.3. Hereto, if the interval S conformed with the equation of S/H1 ≦ 0.3, it means the interval S is smaller, and thus the trench 14 is close to the tip end of the dental implant 1 (the lowest end as shown in FIG. 1H). Accordingly, as the dental implant 1 is rotating along the rotative direction P, the trench 14 can easily cut the jaw bone 91 beneath the dental implant 1. Therefore, the dental implant 1 may be driven to cut downward, and the dental implant 1 may be screwed more deep into the jaw bone 91. After the dental implant 1 was screwed in the jaw bone 91, the arc-shaped head portion can cushion or offset the occlusion force impacted to the jaw bone 91 during biting food. The occlusion force is usually exerted the head portion 15 by a vertical force, and the dental implant 1 having blunt head portion 15 can avoid the impact force of chewing food from damage of stress concentration (i.e. biting force is sustained by a relatively small area).

Please refer to a cross-sectional view of FIG. 2A. When the head portion 15 of the dental implant 1 is cutting the jaw bone 91, the cutting face 123 can shave off the jaw bone 91 thereabout and then accumulate the shaved bone scrap 92 inside the trench 14. When the dental implant 1 is continuously rotated along the rotative direction P, the cutting face 123 may push and squeeze some of the bone scrap 92, and guide the bone scrap 92 toward a bone defeat portion at the radial side of the dental implant 1 (as shown in FIG. 1D).

Further, refer to FIG. 2B. As the dental implant 1 is screwed in the jaw bone 91, the second thread portion 12 is able to cut the jaw bone 91. Namely the cutting face 123 located in one end of the second thread portion 12 is able to scrape the jaw bone 91, or squeeze the bone scrap 92.

Please refer to FIG. 3A to FIG. 3C, which are diagrams of drilling resistance of the dental implant according to the present disclosure. As shown in FIG. 3A, FIG. 1B and FIG. 1H, the larger the value of S/H1 (means the interval S is bigger) is, the bigger the drilling resistance of the dental implant 1 into the jaw bone 91 may be. As shown in FIG. 3B and FIG. 1F, as the angle α1 is approaching to 90 degrees, the drilling resistance of the dental implant 1 into the jaw bone 91 will become greater and greater. Thus, the rotating torque for rotating the dental implant 1 needs to be increased. The smaller the angle α1 is, the smaller the drilling resistance of the dental implant 1 into the jaw bone 91 may be. However, the second thread portion 12 will be easily burst into pieces if the angle α1 is too small. In general, the angle α1, which is formed by intersection of the tangent direction of the cutting face 123 and the cutting face 123, is preferably conformed with 20 ≦ α1 ≦ 90 degrees, so as to balance the drilling resistance and mechanical strength (which may endure the stress concentration) of the second thread portion 12. As shown FIG. 3C and FIG. 1F, a radius R1 is formed between an outermost side of the second thread portion 12 and a center of the body portion 18. As the value of T1/R1 approaching 1.0 (means the trench depth T 1 is bigger), the cutting face 123 will become greater and greater, and thus the drilling resistance of dental implant 1 into deep of the jaw bone 91 will also become larger and larger.

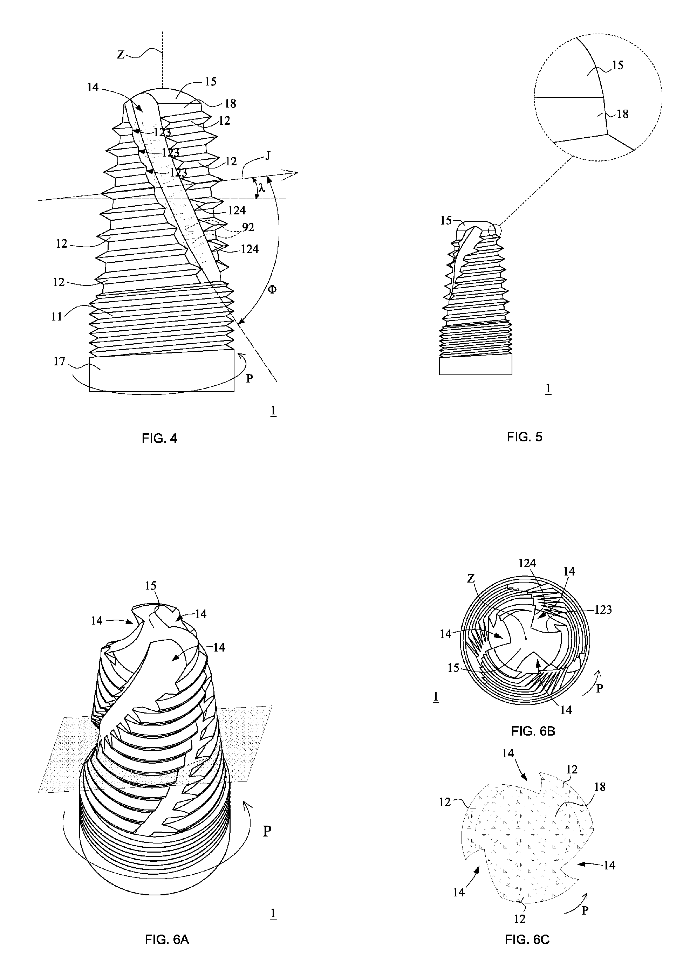

Refering to FIG. 4, which is a side view of dental implant of second embodiment according to the present disclosure. As shown in FIG. 4, the second thread portion 12 of the dental implant 1 is rotated around the drilling axial direction Z and formed the tangent direction J. The tangent direction J of the second thread portion 12 and a horizontal line are intersected to form an angle λ. The tangent direction J is generally orientated from lower left toward upper right. The tangent direction J of the second thread portion 12 is slightly slanted, and formed an angle Φ if the tangent direction J is rotated toward the lower end of the drilling axial direction Z to intersect with the trench 14 (i.e. the angle Φ is intersected by the tangent direction J and the trench 14). The angle Φ is smaller than or equal to 90 degrees (i.e. Φ ≦ 90 degrees). Consequently, as the dental implant 1 is screwing into the jaw bone 91 in the clockwise direction, the cutting face 123 of the second thread portion 12 moves along the track of tangent direction J and squeeze the bone scrap 92 in the orientation of the tangent direction J. In the meanwhile, since the left wall of the trench 14 (formed by the cutting faces 123 showed in FIG. 4) has the inclined angle Φ, it may provide or exert the bone scrap 92 an upward component of force. Therefore the bone scraps 92 will gradually be moved upward inside the trench 14, and approached the head portion 15. In this manner, the bone scraps 92 may be moved and guided upward, to approach the head portion 15. If sinus lifting process or bone graft materials re-supplying is required, the bone scraps 92 need to be squeezed and sent upward, to fill the sites neighboring to the head portion 15 (such as sinus membrane); in this scenario, the dentist can utilize the dental implant 1 of this embodiment to push the bone scrap 92 of patients themselves (i.e. natural bone pieces) to apporach the site where approximates to the head portion 15 of the dental implant 1. In this manner, the natural bone scrap 92 which is moved toward the head portion 15 can be utilized to push and squeeze the sinus membrane. As a result, it has no need to fill bone graft material while maxilla implanting is made, and thus the cost for maxillary sinus augmentation may have chance to be saved and the possibility of puncturing the sinus membrane may be eliminated. Therefore, the dental implant 1 of this embodiment equipped with the trenches 14 in a slanting manner may have advantages as following : the natural bone scrap 92 can be guided and filled to an upper portion of the dental implant 1 (toward the head portion 15 or the site neighboring to the head portion 15), and hence the bone scrap 92 can be utilized to squeeze and lift the sinus membrane.

As shown in FIG. 1A to FIG. 1H with the above descriptions of the dental implant 1, the tangent direction J of the second thread portion 12 toward the head portion 15 is intersected with the trench 14 to form an angle Φ, in which the angle Φ is smaller than 90 degrees. The bone scrap 92 in the trench 14 therefore can be moved far away from the head portion 15 because the inclined angle Φ can provide or exert the bone scrap 92 a downward component of force. The trenches 14 of the dental implant 1, as shown in FIG. 1A to FIG. 1H, can guide the bone scrap 92 to its radial sides, so as to fill the bone porous portion (osteoporosis) around the radial sides. As for the dental implant 1 in FIG. 4, the tangent direction J of the second thread portion 12 toward a lower end (far away from the head portion 15) is intersected with the trench 14, to form an angle Φ, in which the angle Φ is smaller than 90 degree. The bone scrap 92 in the trench 14 therefore can be moved toward the head portion 15 because the inclined angle Φ can provide or exert the bone scrap 92 an upward component of force. Accordingly, while the sinus lifting process or bone graft materials re-supplying is needed, the dental implant 1 demonstrated in FIG. 4 can guide the bone scrap 92 toward the head portion 15 by the trenches 14 (technically by the direction of the angle Φ), and then utilize the bone scraps 92 to squeeze and lift the sinus membrane, or to fill the bone porous portion around the head portion 15.

The present invention provides other embodiments. Please refer to FIG. 5, which is a side view of dental implant of third embodiment according to the present invention. As shown in FIG. 5 and the partial enlarged view, the head portion 15 is smoothly connected with the body portion 18 in arc-shaped without acute angle corner. As the head portion 15 of the dental implant 1 is drilling into the deep of the jaw bone 91, the interconnecting area of the head portion 15 and the body portion 18 has a smaller friction resistance, which may bring benefit to the implanting process if the dental implant 1 is drilled into the jaw bone 91. Since the head portion 15 of the dental implant 1 has a planar top end, the blunt head portion 15 can disperse the occlusion impact while biting food (because the bearing pressure is inversely proportional to the area of thrust surface).

Please refer to FIG. 6A to FIG. 6C. FIG. 6A a perspective view of dental implant of fourth embodiment according to the present invention; FIG. 6B is a top view of the dental implant of fourth embodiment of the present invention; and FIG. 6C is a cross-sectional view along the rectangular plane of FIG. 6A. The dental implant 1 of this embodiment is formed with three trenches 14 on radial sides of the head portion 15 and the body portion 18.

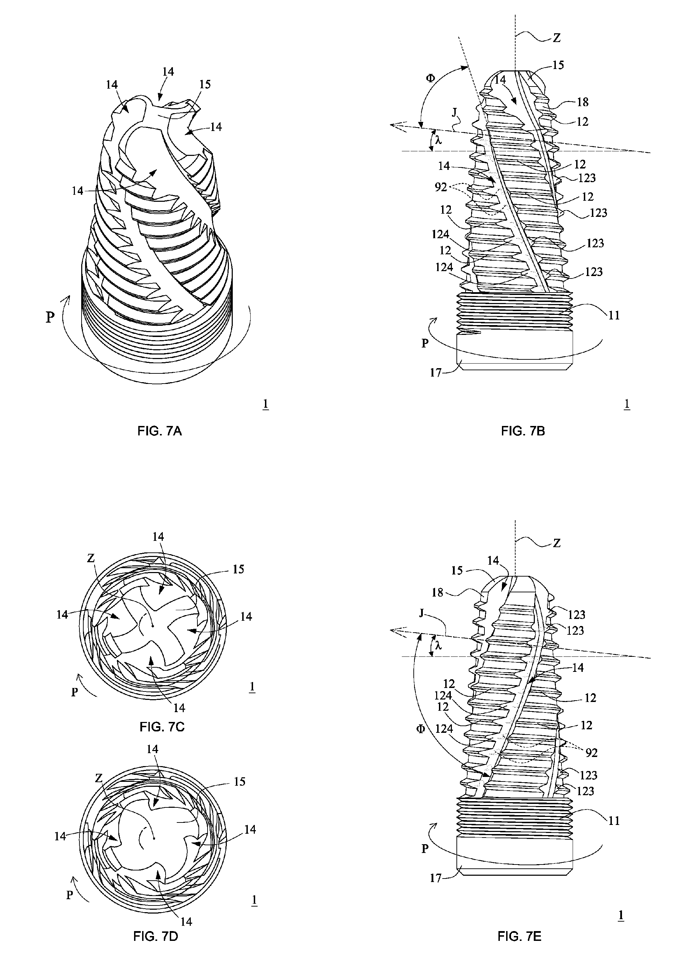

Please refer to FIG. 7A to FIG. 7D. FIG. 7A is a perspective view of dental implant of fifth embodiment according to the present invention; FIG. 7B a front view of the dental implant of the fifth embodiment of the present invention; and FIG. 7C to FIG. 7D are top views of the dental implant of fifth embodiment according to the present invention. As shown in FIG. 7A and FIG. 7B, according to the dental implant 1 of this embodiment, the second thread portions 12 are rotated along the drilling axial direction Z and forms a tangent direction J. The tangent direction J of the second thread portion 12 is intersected with the horizontal line to form an angle λ. Since the tangent direction J is generally orientated from lower right toward upper left, the dental implant 1 needs to be rotated in counterclockwise direction (around the drilling axial direction Z) to screw the dental implant 1 into the jaw bone 91. Please note that, the dental implant 1 of this embodiment is drilled into patient's jaw bone 91 in a counterclockwise direction, comparatively the dental implant 1 in FIG. 1D is drilled in a clockwise direction. Thus it can be seen, whether the drilling direction of the dental implant 1 is clockwise or counterclockwise which is determined by the slanting direction of the tangent direction J. Besides, this embodiment has four trenches 14 on radial sides of the head portion 15 and the body portion 18. The tangent direction J of the second thread portion 12 toward an upper end of the drilling axial direction Z is intersected with the trench 14 to form an angle Φ as shown in FIGS. 7B, and the angle Φ is smaller than 90 degrees (that is, Φ ≦ 90 degrees). As the dental implant 1 of this embodiment is screwed in the jaw bone 91, the cutting face 123 of the second thread portion 12 will move in the tangent direction J, and squeeze the bone scraps 92 toward the tangent direction J. In the meanwhile, a right wall of the trench 14 (consisted of the cutting faces 123) forming the inclined angle Φ can provide or exert the bone scrap 92 a downward component of force so as to drive the bone scraps 92 moving downward inside the trench 14 (departing from the head portion 15) gradually. The bone scrap 92 therefore can be guided and filled to the bone porous area around the radial sides of the dental implant 1, and hence the jaw bone surrounded the dental implant 1 may be much solider and more stable. In this manner, the patient's requirements for resupplying the bone graft materials can be reduced, as well as the cost reduction for tooth restoration. Besides, FIG. 7C and FIG. 7D illustrate different types of trench 14 and different head portion 15. The trenches 14 are formed around a periphery of the head portion 15 in a circle.

Please refer to FIG. 7E, which is a side view of derivative dental implant according to the fifth embodiment of the present invention. As shown in FIG. 7E, the second thread portion 12 of the dental implant 1 is rotated around the drilling axial direction Z and forms a tangent direction J. The tangent direction J of the second thread portion 12 is intersected with the horizontal line to form an angle λ. The tangent direction J is generally orientated from lower right toward upper left. The tangent direction J of the second thread portion 12 toward a lower end of the drilling axial direction Z is intersected with the trench 14 so as to form an angle Φ, and the angle Φ is smaller than 90 degrees (i.e. Φ ≦ 90 degrees). As the dental implant 1 of this embodiment is screwed into the jaw bone 91, the cutting face 123 of the second thread portion 12 will move along the tangent direction J, and hence squeezes the bone scraps 92 toward the tangent direction J. In the meanwhile, a right wall of the trench 14 (consisted of the cutting faces 123) with the inclined angle Φ can provide or exert the bone scraps 92 an upward component of force so as to drive the bone scraps 92 moving upward inside the trench 14 gradually (toward the head portion 15). On condition of lifting sinus or resupplying bone graft materials in dental surgery, this embodiment can utilize the bone scraps 92 upward moving mechanism (toward the head portion 15) to squeeze or urge the bone scraps 92 to move and fill the site neighboring to the sinus membrane or the head portion 15.

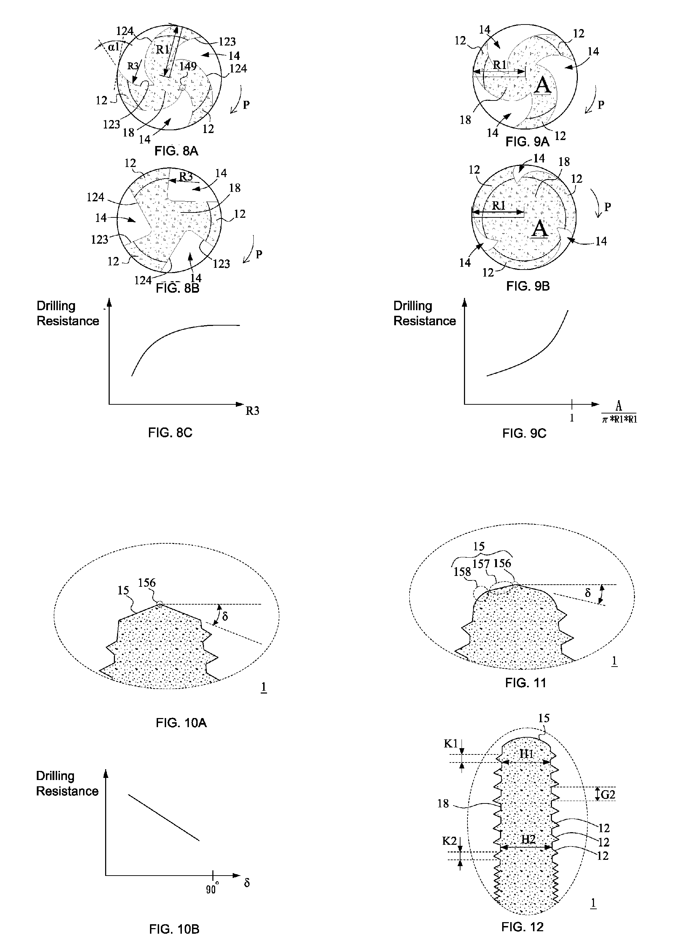

Further, the configuration of the body portion 18 and the second thread portion 12 will also affect the drilling effect of the dental implant 1, not just the trench 14 and the orientation of the second thread portion 12. Please refer to FIG. 8A to FIG. 8B, which illustrate the dental implant having different cutting faces according to the present invention. In the embodiment of FIG. 8A, there are three trenches 14 and three second thread portions 12 surrounded around the body portion 18. Two sides of each trench 14 are surrounded with a cutting face 123 and a cumulative face 124 respectively. Besides, the cutting face 123 of the second thread portion 12 has a curvature radius R3, and the tangent direction of the cutting face 123 is intersected with the cutting face 123 so as to form an angle α1. The angle α1 is preferably about 25 to 60 degrees, so that it may give considerations to the cutting effect and structural strength of the second thread portion 12 (in a practical case, 60 ≦ α1 ≦ 90 degrees may be available). In this embodiment, a curvature radius R3 of the cutting face 123 is smaller than a radius R1 of the second thread portion 12 (that is, R3<R1). Besides, an occupied space of the trench 14 (or the sectional area of the trench 14) is greater than that of the embodiment of FIG. 6C, therefore the trenches 14 in this embodiment can accommodate much more bone scrap 92. If one having tooth with thinner roots (means the bone around the real tooth is relatively sufficient) needs to be extracted, the dental implant 1 of FIG. 8A can be utilized to accommodate much more bone scrap 92 by means of the greater trench 14. Refer to the embodiment of FIG. 8B again, the cutting face 123 of the second thread portion 12 is a plane (revealed in a straight line in FIG. 8B), so that the curvature radius R3 of the cutting face 123 is infinity. Comparing the drilling resistance of the dental implant 1 in FIG. 8A and FIG. 8B, shown in FIG. 8C, the drilling resistance of the dental implant 1 into the jaw bone 91 is become greater when the curvature radius R3 is increasing along with the cutting face 123. The reason is that more curved cutting face 123 (curvature radius R3 becomes smaller) can guide the bone scrap 92 slightly to move in a radial direction. Further, in the embodiment of FIG. 8A, both of the cutting face 123 and the cumulative face 124 have arc-shaped cross-section, and an interconnecting area among the cutting face 123 and the cumulative face 124 at two sides of the trench 14 has an acute angle corner 149. In the embodiment of FIG. 8B, cross-sections of the cutting face 123 and the cumulative face 124 are revealed as straight line, and an interconnecting area among the cutting face 123 and the cumulative face 124 at two sides of the trench 14 has no acute angle corner. Since there is no acute angle corner between the cutting face 123 and the cumulative face 124, it helps to guide movement of the bone scrap 92 in the trench 14.

Please refer to FIG. 9A to FIG. 9C. FIG. 9A and FIG. 9B are cross-sectional views of dental implant with different area of body portion. FIG. 9C is diagram showing the drilling resistance related to body portion 18, second thread portion 12 and sectional area (A) of FIG. 9A and FIG. 9B. A space of the trench 14 in FIG. 9A is larger than a space of trench 14 in FIG. 9B, so that the body portion 18 with three second thread portions 12 in FIG. 9A has a sectional area (A) smaller than that of the embodiment of FIG. 9B. Reason is that the sectional area (A), sum of area of the body portion 18 and the second thread portions 12, will raise difficulty for the dental implant 1 drilling into the deep of the jaw bone 91. As shown in FIG. 9C, one fictitious circle can be defined by the radius R1 of the second thread portion 12, and the area of the fictitious circle is equal to π *R1*R1. If a ratio of the sectional area (A) of the body portion 18 plus the second thread portions 12 to the area of the fictitious circle π *R1*R1 is more approaching 1.0 (means the space of the trench 14 is smaller, and the sectional area (A) is greater), the drilling resistance of the dental implant 1 into the deep of the jaw bone 91 is become larger and larger. The reason is that less space to receive and accommodate the bone scrap 92 may raise difficult for the dental implant 1 to drill into the jaw bone 91. Furthermore, the bone scrap 92 might have chance to stick or block inside the trenches 14 when the bone scrap 92 is naturally generated.

Please refer to FIG. 10A to FIG. 10B. FIG. 10A is an enlarged view of head portion of dental implant of the present invention. FIG. 10B is a diagram of drilling resistance related to inclined angle (δ) of head portion according to FIG. 10A. As shown in the above figures, the head portion 15 of the dental implant 1 includes a peak 156, which has an inclined angle δ and formed along the contour of the head portion 15. In general, if the inclined angle δ is too big (means the head portion 15 too sharp), the dental implant 1 is easily to have stress concentration occurred at the site of the peak 156 when the jaw bone 91 is bearing the occlusion impact of biting food. The destructive power and impact caused by the stress concentration may damage the jaw bone 91. If the inclined angle δ is too small (means the head portion 15 is too obtuse), the drilling force of the dental implant 1 into the jaw bone 91 is greater, which is not good for the dentist to perform a dental implantation surgery on the jaw bone 91 (as shown in FIG. 10B). Clinically, the inclined angle δconformed with 0 ≦ δ ≦ 30 degrees may give consideration to the drilling effect and avoiding the problem of stress concentration.

Please refer to FIG. 11, which is an enlarged cross-sectional view of head portion of dental implant of sixth embodiment according to the present invention. As shown in the cross-sectional view, the head portion 15 has a straight section 157 and a curve section 158, and a inclined angle δ is formed by an intersection of the straight section 157 and the peak 156. The curve section 158 is arranged outside the straight section 157. In other embodiments, the head portion 15 could be formed without the peak156, so that a lateral cross-section of the head portion 15 can be arc-shaped or planar. The arc or outside of plane can be connected with a straight line of an arc with different curvature, so that the lateral cross-section of the head portion 15 can be configured as many line segments.

Please refer to FIG. 12, which is a contour view of dental implant of seventh embodiment according to the present invention. The body portion 18 of the dental implant 1 has a diameter H1 close to the head portion 15, and a diameter H2 far away from the head portion 15. The diameter H1 is equal to the diameter H2 (that is, H1=H2). Besides, the pitches G2 between the second thread portions 12 are the same, no matter close to or far away from the head portion 15. In this manner, the dental implant 1 rotates by one cycle along the rotative direction P will drill to move a distance of pitch G2 toward the deep of the jaw bone 91. The bases of the second thread portions 12 are connected with the body portion 18 to form a base width K1, K2. The base width K1 close to the head portion 15 is equal to the base width K2 far away from the head portion 15 (that is, K1=K2). In other embodiments, the base width K1 close to the head portion 15 can be smaller than the base width K2 far away from the head portion 15 (i.e. K1<K2). As the dental implant 1 is drilled into the deep of the jaw bone 91 (means the site of the base width K1 is buried into the jaw bone 91, and afterward the site of the base width K2 is buried), the second thread portion 12 may have more and more surface to contact with the jaw bone 91 because the site of base width K2 has greater surface area than the site of base width K2. More contact surface brings more osseous integration and more friction between the dental implant 1 and the jaw bone 91. Therefore the mechanical strength of dental implant 1 or the resistance against the occlusion force of biting food is absolutely greater and greater.

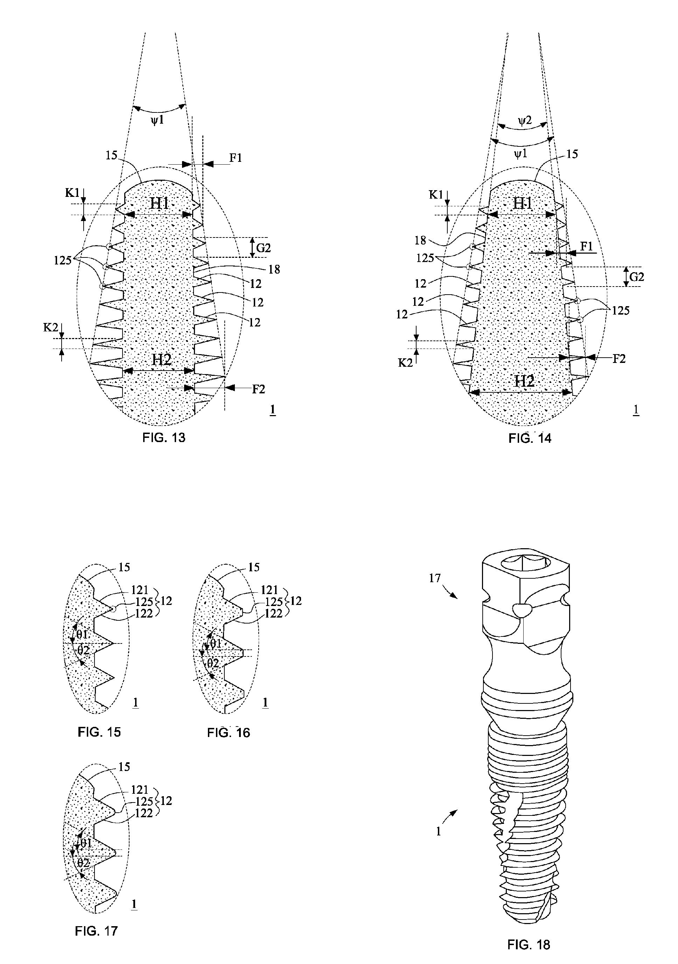

Please refer to FIG. 13, which is a contour view of dental implant of eighth embodiment according to the present invention. In this embodiment, the body portion 18 of the dental implant 1 has a diameter H1 close to the head portion 15, which is equal a diameter H2 of the body portion 18 far away from the head portion 15 (i.e. H1=H2). The second thread portion 12 has a thread height F1 close to the head portion 15, and a thread height F2 far away from the head portion 15. The thread height F1 is smaller than the thread height F2 (i.e. F1<F2). Because F 1 is smaller than F2, the crests 125 of the second thread portions 12 at sides of the dental implant 1 may be extended and intersected to form an intersection angle Ψ1. In general, the intersection angle Ψ1 is about smaller than 30 degrees. As the dental implant 1 is drilled into the deep of the jaw bone 91, more and more contact surface of the second thread portions 12 can be touched with the jaw bone 91 by means of the higher and higher thread height F2. Therefore, the friction generated by the dental implant 1 and the osseous integration can be absolutely increased. The mechanical strength of dental implant 1 and the resistance against the occlusion force of biting food are greater and greater. In some other embodiments, the thread height F 1 of the second thread portion 12 close to the head portion 15 can be equal to the thread height F2 of the second thread portion 12 far away from the head portion 15 (i.e. F1=F2).

Please refer to FIG. 14, which is a contour view of dental implant of ninth embodiment according to the present invention. In this embodiment, the crests 125 of the second thread portion 12 may be extended and intersected to form an intersection angle Ψ1, which is conformed with 0 < Ψ1 < 30 degrees. The body portion 18 has a cross-section along an axial direction of the dental implant 1 ( along the drilling axial direction Z), and an intersection angle Ψ2 is defined by side edges of the body portion 18. In this embodiment, it conforms with Ψ1 ≧ Ψ2. Further, the body portion 18 has a diameter H1 close to the head portion 15, in which the diameter H1 is smaller than a diameter H2 of the body portion 18 far away from the head portion 15 (i.e. H1 < H2). In words, this configuration demonstrated in FIG. 14 has thread height F2 greater than the thread height F1, and the base width K2 greater than or equal to the base width K1 (i.e. H2>H1, F2>F1, K2 ≧ K1).

Please refer to FIG. 15 to FIG. 17. FIG. 15 is a contour view of dental implant of tenth embodiment according to the present invention; FIG. 16 shows a contour view of dental implant of eleventh embodiment according to the present invention; and FIG. 17 shows a contour view of dental implant of twelfth embodiment according to the present invention. As shown in FIG. 15, the second thread portions 12 of the dental implant 1 have crests 125, and the crests 125 are peak-shaped. As shown in FIG. 16, the crests 125 of the second thread portions 12 are jagged-shaped. As shown in FIG. 17, the crests 125 of the second thread portions 12 are arc-shaped. The second thread portion 12 further has a main sustaining face 121 and a secondary sustaining face 122. The main sustaining face 121 is close to the head portion 15, and the secondary sustaining face 122 is far away from the head portion 15. The main sustaining face 121 and the horizontal line are intersected to form an angle θ1 (means the slanting angle of the main sustaining face 121). The secondary sustaining face 122 and the horizontal line are intersected to form an angle θ2 (means the slanting angle of the secondary sustaining face 122). In general, θ1 can be equal to θ2. However, in a preferably embodiment, θ1 is smaller than θ2; namely the main sustaining face 121 has more gradual angle (i.e. less inclined) than the secondary sustaining face 122. Because more gradual main sustaining face 121 may produce smaller lateral component of force, the second thread portion 12 can resist or sustain a greater occlusion force from biting if the dental implant 1 is buried in the jaw bone 91. More gradual main sustaining face 121 can withstand higher occlusion force.

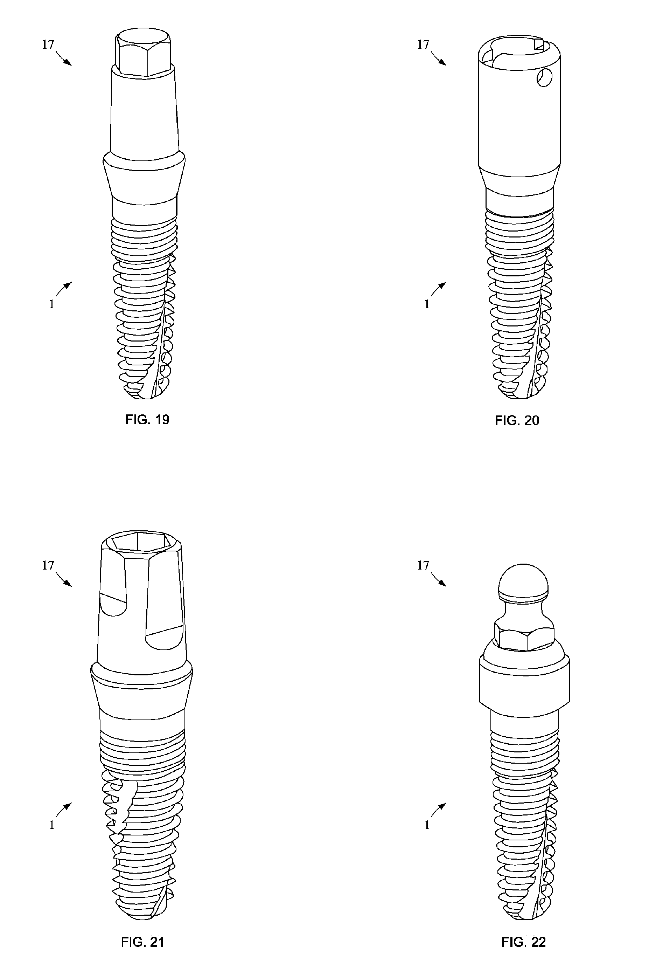

Please refer to FIG. 18 to FIG. 22, which are perspective views of dental implant of thirteenth embodiment according to the present invention. These embodiments illustrate that the dental implant 1 can be applied, connected, coupled, or mounted to several types of dental connecting elements 17. The dental connecting element 17 can be dental abutments with different configurations, dental crowns, dental tools or any connecting structure for dismounting or linking, engaging structure or wedging structure. Further, the dental implant 1 and the dental connecting element 17 may be fixed together (one piece structure) as shown in FIG. 18 to FIG. 22, or may be detachable structure (i.e. can be assembled in separable manner).

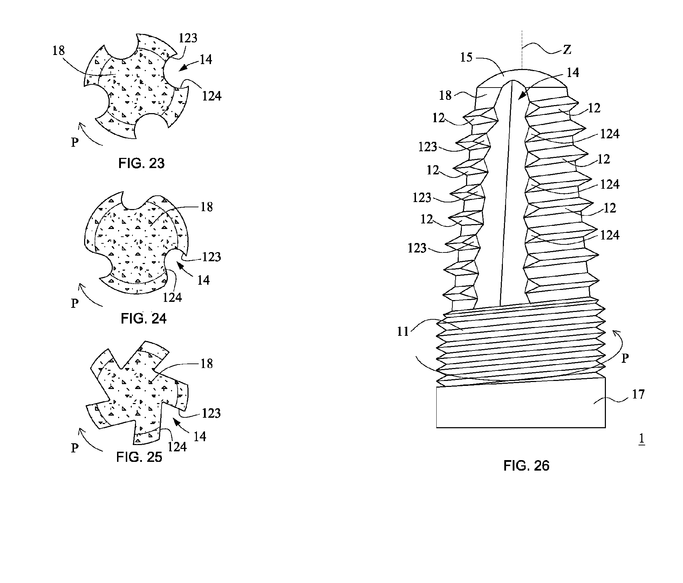

Please refer to FIG. 23, which is a cross-sectional view of dental implant of fourteenth embodiment according to the present invention. In this embodiment, the dental implant 1 has four trenches 14. Each trench 14 has a cross-section of half-circle. In other words, each trench 14 is surrounded by the cutting face 123 and the cumulative face 124 which are curve with equal curvature radius. Please refer to FIG. 24, which is a cross-sectional view of dental implant of fifteenth embodiment according to the present invention. In this embodiment, the dental implant 1 has three trenches 14. Each trench 14 is surrounded by the cutting face 123 and the cumulative face 124 which are curved surface with different curvature. Please refer to FIG. 25, which is a cross-sectional view of dental implant of sixteenth embodiment according to the present invention. In this embodiment, the dental implant 1 has five trenches 14. Each trench 14 is surrounded by the cutting face 123 the cumulative face 124 which are planar structure. A supplementary note is that the dental implant 1 can be formed by two, three, fourth, five or more trenches 14, and the shape or contour of the cutting face 123 and the cumulative face 124 can be any configuration of above-mentioned embodiments.

Please refer to FIG. 26, which is a side view of dental implant of fourteenth embodiment according to the present invention. In this embodiment, the trench 14 is substantially parallel to the drilling axial direction Z. In other words, the trench 14 is formed at radial sides of the head portion 15 and the body portion 18, and is arranged approximating to the vertical. In detail, if the diameter H 1 of the body portion 18 is equal to the diameter H2 of the body portion 18 (as shown in FIG. 12), the trench 14 can be exactly parallel to the drilling axial direction Z. If the diameter H 1 of the body portion 18 is smaller than the diameter H2 of the body portion 18 (as shown in FIG. 1B), the trench 14 may be intersected with the drilling axial direction Z to form a small angle (not shown). A supplementary note is that, all the structure relationship between the second thread portion 12, trench 14, head portion 15, body portion 18 can be optionally selected from any one of the above-mentioned structural feature.

Therefore, the dental implant 1 of the present invention is able to be directly screwed into the jaw bone 91 after real tooth is removed, so that the dentist can screw the dental implant 1 to the site of missing tooth by rotating the dental implant 1. In this manner, no need to drill the jaw bone 91 by means of the dental drilling engine (e.g. dental hand piece, or dental drill) many times or repeatedly. Therefore, the time for dental implant surgery can be shortened, and oral injuries and patient's pain can be reduced, as well as the time for gingiva healing period after dental implantation may also be saved. Besides, the dental implant 1, no matter titanium or zirconium, can be applied to one-piece implant and two-piece implant; thus the indirect advantages are: avoiding the jaw bone 91 from being drilled many times and dug repeatedly, and preventing surgery error happened and over-deep drilling. If the upper jaw which contains maxillary sinus is drilled too deep, it may impale or break through the sinus membrane. If the lower jaw is drilled too deep, the facial nerve may be dug broken. Further, the dental implant 1 has the trenches 14 formed along an orientation angle Φ, and the trench 14 is extended from the head portion 15 toward the first thread portion 11. Therefore the bone scraps 92 in the trench 14 can be guided to the head portion 15 (as shown in FIG. 4) or to the radial sides of the dental implant 1 (as shown in FIG. 1D) if the dental implant 1 is screwed into jaw bone 91, so that the patient's bone scraps 92 can be used to push sinus membrane or substitute for the bone graft materials, so that can fulfill the patients with different conditions. The dental implant 1 of the present invention has the dental treatment potential for realizing application.

## Claims

1. A dental implant, comprising :
a body portion (18), defining a drilling axial direction (Z) along a longitudinal direction thereof;
a first thread portion (11), formed on one end of the body portion (18) along the drilling axial direction (Z);
a head portion (15), formed on another end of the body portion (18) along the drilling axial direction (Z);
a plurality of second thread portions (12), having a pitch (G2) larger than a pitch (G1) of the first thread portion (11), and disposed at radial sides of the body portion (18), wherein the second thread portions (12) are distributed along the drilling axial direction (Z) over the body portion (18), wherein each second thread portion (12) has a cutting face (123) and a cumulative face (124) respectively disposed at two ends of a rotative direction in a rotative manner;
a plurality of trenches (14), formed on radial sides of the head portion (15) and the body portion (18), and across through the cutting faces (123) and the cumulative faces (124) from the head portion (15) to approach the first thread portion (11).

2. A dental implant, comprising:
a body portion (18), defining a drilling axial direction (Z) along a longitudinal direction thereof;
a first thread portion (11), formed on one end of the body portion (18) along the drilling axial direction (Z);
a head portion (15), formed on another end of the body portion (18) along the drilling axial direction (Z);
a plurality of second thread portions (12), each second thread portion (12) having a pitch (G2) larger than a pitch (G1) of the first thread portion (11), and formed on a radial side of the body portion (18), wherein the second thread portions (12) are rotated around the drilling axial direction (Z) to form a tangent direction (J);
a plurality of trenches (14), formed on radial sides of the head portion (15) and the body portion (18), and extending from the head portion (15) to approach the first thread portion (11), wherein an angle Φ is intersected by the tangent direction (J) and the trench (14) when the tangent direction (J) rotated toward one end of the drilling axial direction (Z), wherein the angle Φ ≦ 90 degrees.

3. The dental implant as claimed in claim 1 or 2, wherein the head portion (15) includes a peak (156), the peak (156) extending along a contour of the head portion (15) by an inclined angle δ conformed with 0 ≦ δ ≦ 30 degrees.

4. The dental implant as claimed in claim 1 or 2, wherein a diameter H1 of the body portion (18) approximated to the head portion (15) is smaller than or equal to a diameter H2 of the body portion (18) far away from the head portion (15).

5. The dental implant as claimed in claim 4, wherein an interval (S) is formed between a top end of the head portion (15) and a neighboring periphery of the trench (14) conformed with S/H1 ≦ 0.3.

6. The dental implant as claimed in claim 1 or 2, wherein each of the second thread portions (12) has a crest (125), wherein lines connected the crests (125) are extended and intersected to define an intersection angle Ψ1, and an axial cross of the body portion (18) defines an intersection angle Ψ2 conformed with Ψ1 ≧ Ψ2.

7. The dental implant as claimed in claim 1 or 2, wherein a thread height (F1) of the second thread portions (12) approximated to the head portion (15) is smaller than or equal to a thread height (F2) of the second thread portions (12) far away from the head portion (15).

8. The dental implant as claimed in claim 1 or 2, wherein a trench width (D1) of the trench (14) approximated to the head portion (15) is larger than or equal to a trench width (D2) of the trenches (14) far away from the head portion (15).

9. The dental implant as claimed in claim 1 or 2, wherein a trench depth (T1) of the trench (14) approximated to the head portion (15) is larger than or equal to a trench depth (T2) of the trenches (14) far away from the head portion (15).

10. The dental implant as claimed in claim 1 or 2, wherein each second thread portion (12) has an equal pitch (G2), and an interconnecting portion among the second thread portions (12) and the body portion (18) has a base width (K1, K2), the base width (K1) approximated to the head portion (15) is smaller than or equal to the base width (K2) far away from the head portion (15).

11. The dental implant as claimed in claim 1 or 2, wherein each of the second thread portions (12) includes a main sustaining face (121) and a secondary sustaining face (122), the main sustaining face (121) is faced to the head portion (15), the secondary sustaining face (122) is back to the head portion (15), an inclined angle (θ1) of the main sustaining face (121) is smaller than or equal to an inclined angle (θ2) of the secondary sustaining face (122).

12. The dental implant as claimed in claim 1 or 2, wherein an angle α1 is formed between a tangent direction of the cutting face (123) and the cutting face (123) conformed with 20 ≦ α1 ≦ 90 degrees.

13. The dental implant as claimed in claim 1 or 2, wherein a radius (R1) of the second thread portion (12) is larger than a curvature radius (R3) of the cutting face (123).

14. The dental implant as claimed in claim 1 or 2, wherein each of the second thread portions (12) has a crest(125) being peak-shaped, arc-shaped or gear-shaped.

15. The dental implant as claimed in claim 1 or 2, wherein the cutting face (123) and the adjoining cumulative face (124) are formed curve shape or interconnected without folding angle.
